(19) Europäisches Patentamt
European Patent Office
Office européen des brevets

(11) **EP 4 187 083 A1**

(12) **EUROPEAN PATENT APPLICATION**

(43) Date of publication:
**31.05.2023 Bulletin 2023/22**

(21) Application number: **21306667.3**

(22) Date of filing: **30.11.2021**

(51) International Patent Classification (IPC):
**F03D 7/04** (2006.01)     **F03D 7/02** (2006.01)
**G05B 13/02** (2006.01)

(52) Cooperative Patent Classification (CPC):
**F03D 7/046; F03D 7/0204; F03D 7/045;
F03D 7/048;** F05B 2260/84; F05B 2270/204;
F05B 2270/709; G05B 13/027

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **TotalEnergies OneTech
92400 Courbevoie (FR)**

(72) Inventors:
• **GOURVENEC, Sébastien
91410 ROINVILLE (FR)**
• **KADOCHE, Elie
94220 CHARENTON LE PONT (FR)**
• **LEVENT, Tanguy
75009 PARIS (FR)**

(74) Representative: **Lavoix
2, place d'Estienne d'Orves
75441 Paris Cedex 09 (FR)**

(54) **A METHOD FOR CONTROLLING A WIND FARM**

(57)    The present invention concerns a method for controlling a wind farm (10) comprising wind turbines (11), each turbine (11) being suitable for taking a plurality of states, the method comprising the following steps:
- obtaining configuration data,
- obtaining experience data,
- training a model for determining actions enabling to control each turbine (11) of the wind farm (10) depending on the state of each turbine (11), the model being trained in a training environment on the basis of the experience data so as to maximize a reward function, the training environment being a multi-agent reinforcement learning environment, each agent corresponding to a different turbine (11) of the wind farm (10), the reward function being relative to the energy produced by the wind farm (10).

FIG.1

EP 4 187 083 A1

**Description**

TECHNICAL FIELD OF THE INVENTION

The present invention concerns a method for controlling a wind farm. The present invention also concerns an associated computer program product. The present invention also relates to an associated readable information carrier.

BACKGROUND OF THE INVENTION

With the increase in global energy consumption and the risks of global warming, renewable energies are becoming increasingly important. According to W. Tong. "Fundamentals Of Wind Energy". In: WIT Transactions on State-of-the-art in Science and Engineering 44 (2010), the available wind power that can be converted into other forms of energy would be around $1,26 \times 10^9$ megawatts (MW), which is around 20 times the rate of the present global energy consumption. Wind energy is therefore in full expansion, especially with the development of new offshore wind farms.

Wind turbines are subject to numerous physical phenomena inside a farm: an important one is the wake effect. As wind flows through a wind turbine, wind speed decreases and turbulence increases. This process is called "wake effect" and damages the farm. In particular, it reduces from 10 % to 20 % of the total produced energy, and increased turbines fatigue leading to higher operational expenditures (OPEX).

A wind farm optimization can be decomposed into two steps. First, before the farm installation, the plant design consists in finding the best position for each turbine and the best cable routing. Second, when the farm is operational, the farm control consists in intelligently controlling each turbine through different variables, such as the pitch (blades rotation), the tilt (turbine vertical rotation) and the yaw (turbine horizontal rotation).

With yaw control, it is possible to keep turbines aligned with the wind direction as it changes and steers the wake effects. This process, also called wake redirection control (WRC) is one of the most promising control methods to improve the annual energy production (AEP). It consists in misaligning upstream wind turbines with the wind direction, to keep wake effects away from downstream wind turbines.

However, yaw control has to be used wisely because it also increases dynamic mechanic loads. As turbines become more numerous and more powerful (up to 15 MW), physical interactions increase and farm control becomes more complex.

Algorithms based on reinforcement learning (RL) have been developed to better control a wind farm. In particular, recent research have already shown that RL methods can increase a wind farm power production by 15 % and can tackle the model-based algorithms inherent complexity by using model-free approaches. Current works use deep RL but often assume constant wind directions and are conducted on small wind farms.

Hence, the current algorithm do not well perform in any wind conditions. In addition, such algorithms are not optimal because each turbine is optimized individually, without taking into account interactions between turbines.

SUMMARY OF THE INVENTION

There exists a need for a method enabling to control a wind farm, even a large wind farm (more than 20 turbines) in a more precise way to optimize the energy produced by the wind farm.

To this end, the invention relates to a method for controlling a wind farm, the wind farm comprising several wind turbines, each turbine being suitable for taking a plurality of states, each state being at least relative to an orientation of the turbine, each turbine being suitable for changing from one state to another by implementing an action on the turbine, the method comprising the following steps which are computer-implemented:

- obtaining configuration data which are data relative to the turbines of the wind farm,
- obtaining experience data which are data forming experiences used to train a control model, each experience extending over a given time period divided into time steps, the experience data comprising, for each experience, an initial state for each turbine of the wind farm and, for each time step of said experience, a value of at least one wind parameter relative to the wind flowing on the wind farm, and
- training a model for determining actions enabling to control each turbine of the wind farm depending on the state of each turbine, the model being trained in a training environment on the basis of the experience data so as to maximize a reward function, the training environment being a multi-agent reinforcement learning environment, each agent corresponding to a different turbine of the wind farm, the reward function being relative to the energy produced by the wind farm, the obtained trained model being a control model suitable to be used to control the wind farm.

The method according to the invention may comprise one or more of the following features considered alone or in any combination that is technically possible:

- the state of each turbine is relative to at least one angle of rotation of the turbine among the yaw, the pitch and the tilt, the angle of rotation being preferably the yaw;
- for each turbine, the actions are chosen among the following actions: stand still, clockwise rotation of a certain angle relative to the current position and anticlockwise rotation of a certain angle relative to the current position; .
- the training environment comprises a simulator enabling to calculate, for each time step, the wake effect for each turbine and the energy produced by each turbine as a function of the configuration data, of the experience data and of the actions determined for the turbines;
- the reward function depends on the power produced by each turbine and the maximum theoretical power produced by each turbine;
- during the training step, the model is trained so as to respect some constraints while maximizing the reward function;
- the constraints comprise at least one of the following constraints:

  - a constraint relative to a possible range of values for at least one angle of rotation of the turbines as compared to a nominal value, and
  - a constraint relative to the rotation angle of each turbine 11 for each time step in order to limit the fatigue of each turbine and/or the maintenance costs for each turbine;

- the method comprises:

  - a step of operating the control model comprising the determination of actions for controlling the turbines of the wind farm, following the reception by the control model, of the current state of the turbines of the wind farm and of current wind parameter(s), and
  - a step of carrying out the determined actions by sending commands to the turbines of the wind farm;

- the training step comprises obtaining at least one set of data for each time step of each experience, each set of data comprising:

  - the state of each turbine at the considered time step,
  - the wind parameter(s) at the considered time step,
  - the action determined by the model for each turbine,
  - the future state of each turbine when applying the corresponding on said turbine, and
  - the reward obtained for the considered time step,

  the state of a turbine for a given time step being either an initial state or a future state obtained from the set of data of the previous time step.
- the configuration data comprise at least one of the following data: the position of each turbine, the type or model of each turbine, the maximum theoretical power produced by each turbine and a power curve for each turbine;
- the at least one wind parameter is chosen among the direction of the wind and the speed of the wind;
- at least two turbines of the wind farm are different.

The invention also relates to a computer program product comprising a readable information carrier having stored thereon a computer program comprising program instructions, the computer program being loadable onto a data processing unit and causing at least the steps of obtaining configuration data, of obtaining experience data and of training of a method as previously described to be carried out when the computer program is carried out on the data processing unit.

The invention also relates to a readable information carrier on which is stored a computer program product as previously described.

BRIEF DESCRIPTION OF THE DRAWINGS

The invention will be easier to understand in view of the following description, provided solely as an example and with reference to the appended drawings in which:

- Figure 1 is a schematic view of an example of a wind farm,
- Figure 2 is a schematic representation of a turbine defining the different angles of rotation for the turbine,
- Figure 3 is a schematic view of an example of a computer for implementing a method for controlling a wind farm,
- Figure 4 is a flowchart of an example of implementation of a method for controlling a wind farm, and
- Figure 5 is a schematic representation illustrating the implementation of steps of a method for controlling a wind farm.

DETAILED DESCRIPTION OF SOME EMBODIMENTS

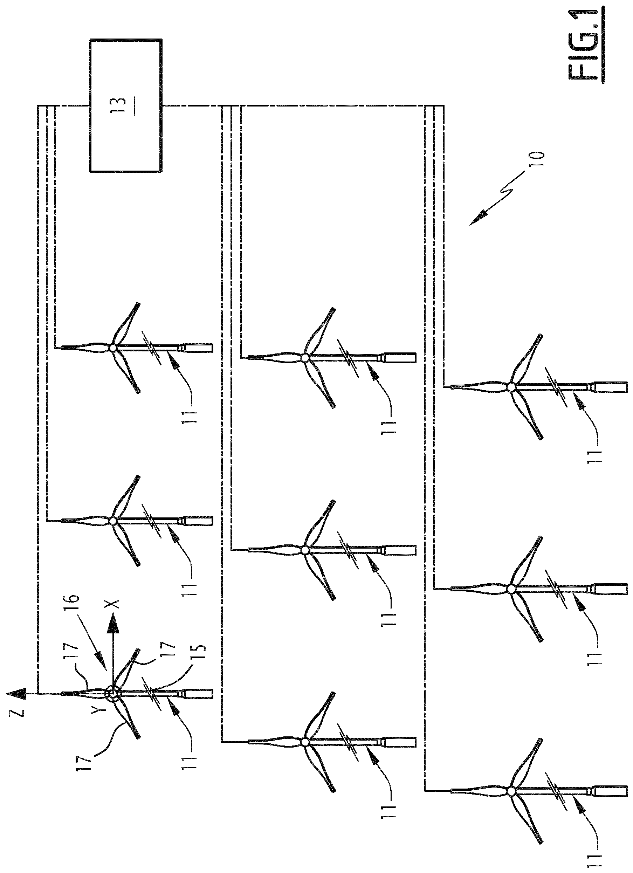

An example of a wind farm 10 is illustrated on figure 1. The wind farm 10 comprises a plurality of wind turbines 11 and at least one tool 13 for controlling said turbines 11.

A wind farm or wind park, also called a wind power station or wind power plant, is a group of connected wind turbines in the same location used to produce electricity. A wind farm also comprises a power station and the cables connecting the turbines to the power station. Wind farms vary in size from a small number of turbines to several hundred wind turbines covering an extensive area. Wind farms can be either onshore or offshore (bottom-fixed or floating).

In the example of figure 1, the wind farm 10 comprises nine turbines 11. However, the invention applies to wind farms having less (at least two) or more turbines 11, even to large wind farms which are wind farms having at least 20 turbines.

Typically, as illustrated for one turbine 11 of figure 1, each turbine 11 comprises a mast 15 and a rotor 16. The rotor 16 is made of blades 17 (generally three). Each turbine 11 is in communication with the tool 13 (represented in dotted lines on figure 1). In the example of figure 1, there is only one tool 13 for all the turbines 11 and each turbine 11 is connected to the tool 13 by a cable. However, in a variant, each turbine 11 has its own tool 13. For example, each turbine 11 defines:

- an elevation axis Z along the direction of the mast 15,
- a first transverse axis X perpendicular to the elevation axis Z and passing by a plane which contains the center of the turbine 11 (junction of the blades 17) and which is parallel to another plane containing the extremities of each blade 17, and
- a second transverse axis Y perpendicular to both the elevation axis Z and the first transverse axis X.

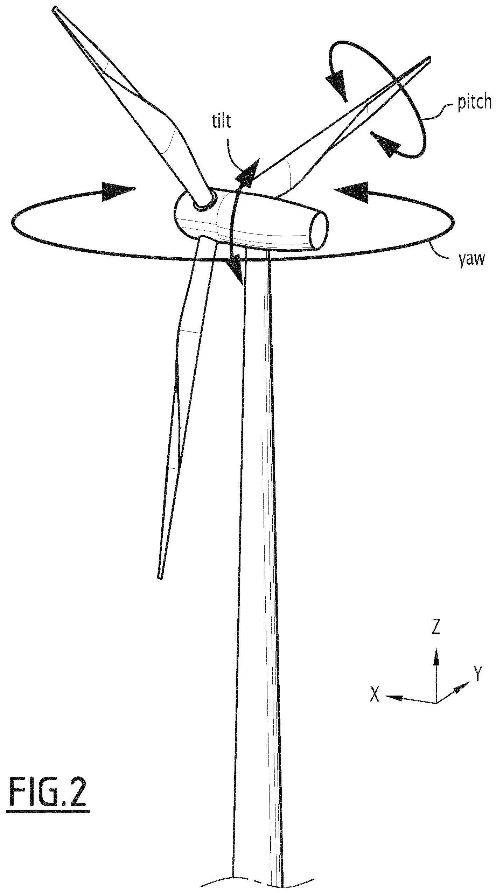

Each turbine 11 is suitable for taking a plurality of states $S_t$. Each state $S_t$ of a turbine 11 is at least relative to an orientation of the turbine 11. Eventually, each state $S_t$ is also relative to other data relative to the turbine 11 (position for example) or to data relative to other turbines 11, such as an orientation and/or a position of such other turbines 11, or other data relative to the wind farm 10. Preferably, the state $S_t$ of each turbine 11 is relative to at least one angle of rotation of the turbine 11 among the yaw, the pitch and the tilt. As illustrated on figure 2, the yaw corresponds to the horizontal rotation of the turbine 11 (rotation around the elevation axis Z). The pitch corresponds to the rotation of a blade relative to a rotor on which said blade is fixed (rotation of a blade on itself). The pitch allows a blade to face the wind more or less. The tilt corresponds to the vertical rotation of the turbine 11 (rotation around the first transverse axis X).

Advantageously, the angle of rotation considered for the states $S_t$ is at least the yaw, which is an angle having an important impact on the wake effect. Preferably, one or both the pitch and the tilt, are also taken into account in the states $S_t$ of the turbines 11.

Each turbine 11 is suitable for changing from one state $S_t$ to another by implementing an action $A_t$ on the turbine 11.

Preferably, the actions $A_t$ for each turbine 11 are chosen among the following actions $A_t$: stand still, clockwise rotation of a certain angle relative to the current position and anticlockwise rotation of a certain angle relative to the current position.

The turbines 11 of the wind farm 10 are, for example, all identical.

In a variant, at least two turbines 11 of the wind farm 10 are different.

The tool 13 is configured to control the wind farm 10, and more specifically the orientation of the turbines 11 of the wind farm 10. In a variant, when each turbine 11 has its own tool 13, it will be understood that the description below, done for a single tool 13, applies to each individual tool 13.

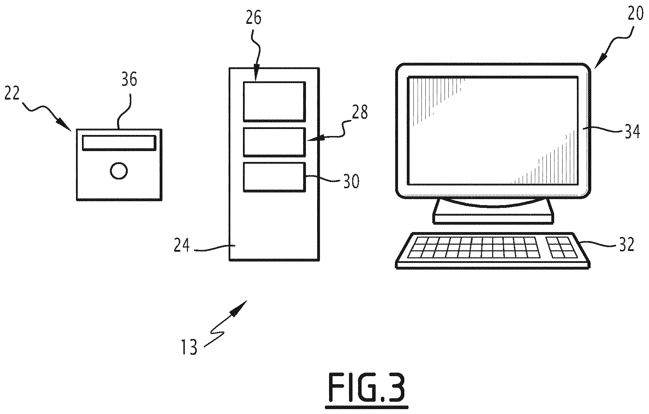

In the example shown in figure 3, the tool 13 comprises a calculator 20 and a computer program product 22.

The calculator 20 is preferably a computer.

More generally, the calculator 20 is a computer or computing system, or similar electronic computing device adapted to manipulate and/or transform data represented as physical, such as electronic, quantities within the computing system's registers and/or memories into other data similarly represented as physical quantities within the computing system's memories, registers or other such information storage, transmission or display devices.

The calculator 20 interacts with the computer program product 22.

As illustrated on figure 3, the calculator 20 comprises a processor 24 comprising a data processing unit 26, memories 28 and a reader 30 for information media. In the example illustrated on figure 3, the calculator 20 comprises a human machine interface 32, such as a keyboard, and a display 34.

The computer program product 22 comprises an information medium 36.

The information medium 36 is a medium readable by the calculator 20, usually by the data processing unit 26. The readable information medium 36 is a medium suitable for storing electronic instructions and capable of being coupled to a computer system bus.

By way of example, the information medium 36 is a USB key, a floppy disk or flexible disk (of the English name "Floppy disc"), an optical disk, a CD-ROM, a magneto-optical disk, a ROM memory, a memory RAM, EPROM memory, EEPROM memory, magnetic card or optical card.

On the information medium 36 is stored the computer program 22 comprising program instructions.

The computer program 22 is loadable on the data processing unit 26 and is adapted to entail the implementation of a method for controlling a wind farm 10, when the computer program 22 is loaded on the processing unit 26 of the calculator 20.

In a variant, the or each tool 13 is in communication with a distant server on which the computer program is stored.

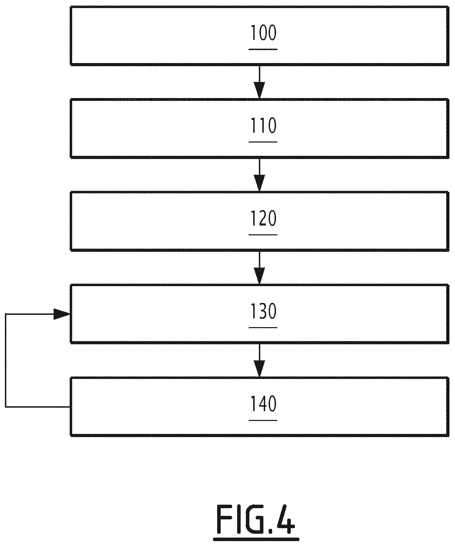

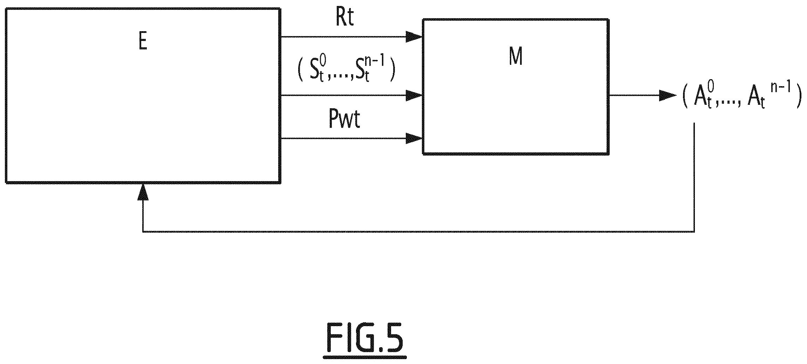

A method for controlling the wind farm 10 using the tool(s) 13, will now be described with reference to figures 4 and 5, which schematically illustrate an example of the implementation of a method for controlling a wind farm 10.

The control method comprises a step 100 of obtaining configuration data. The obtaining step 100 is, for example, implemented by the calculator 20 interacting with the computer program product 22, that is to say is computer-implemented.

The configuration data are data relative to the turbines 11 of the wind farm 10. Preferably, the configuration data enables to model the wind farm 10.

For example, the configuration data comprise at least one of the following data: the position of each turbine 11, the type or model of each turbine 11 and the maximum theoretical power produced by each turbine 11 and a power curve for each turbine 11.

The control method comprises a step 110 of obtaining experience data. The obtaining step 110 is, for example, implemented by the calculator 20 interacting with the computer program product 22, that is to say is computer-implemented. The experience data are data forming experiences used to train a control model M that will be described in the following of the description. The experience data are for example obtained by measurements or are simulated data.

The experience data comprises at least two experiences, that is to say at least one experience for the learning of the control model M and one experience for the test of the control model M.

Each experience extends over a given time period divided into time steps $\Delta t_0$, ..., $\Delta t_n$. The duration of the time steps $\Delta t_0$, ..., $\Delta t_n$ are preferably equal for a same experience. The duration of a time step is for example 10 minutes. The duration of the time period is for example a day, a month or a year.

The experience data comprise, for each experience:

- an initial state $S_{t0}$ for each turbine 11 of the wind farm 10 and,
- for each time step $\Delta t$ of said experience, a value of at least one wind parameter $P_{wt}$ relative to the wind flowing on the wind farm 10.

For example, the at least one wind parameter $P_{wt}$ is chosen among the direction of the wind and the speed of the wind. Preferably, both parameters are taken into account for each experience.

The control method comprises a step 120 of training a model M for determining actions $A_t$ enabling to control each turbine 11 of the wind farm 10 depending on the state $S_t$ of each turbine 11. The training step 120 is, for example, implemented by the calculator 20 interacting with the computer program product 22, that is to say is computer-implemented.

The obtained trained model M is a control model M suitable to be used to control the wind farm 10. The obtained trained model M is preferably specific to the wind farm 10 for which the model M has been trained or to a category of wind farm 10 having the same configuration data than the wind farm 10 for which the model M has been trained.

The model M to be trained interacts with an environment according to the principle of deep reinforcement learning. The model M to be trained is, for example, a neural network. More precisely, the model M is trained according to the principle of multi-agent reinforcement learning (MARL) environment.

As illustrated on figure 5, during training, the model M to be trained is suitable for determining actions $A_t^0$ ,..., $A_t^{n-1}$ in response to states $S_t^0$ , ,..., $S_t^{n-1}$ generated by a training environment E for each turbine 11 of the wind farm 10 and for wind parameter(s) $P_{wt}$ generated by the training environment E. The actions $A_t^0$ ,..., $A_t^{n-1}$ generated by the model M are suitable to be processed by the environment E. Preferably, the environment E checks for compliance with a set of constraints when executing the actions $A_t^0$ , ..., $A_t^{n-1}$ and generates the resulting next states $S_{t+}^0$ ,..., $S_{t+1}^{n-1}$ and at least one reward $R_t$.

The model M is then trained on the basis of data comprising current states $S_t^0$ ,..., $S_t^{n-1}$ , current wind parameter(s) $P_{wt}$, and the determined actions $A_t^0$ ,..., $A_t^{n-1}$ and reward(s) $R_t$. The training of the model M is, for example, carried out according to a Q-learning algorithm (value based) or a policy-based algorithm. The training is, for example, done on an ongoing basis (for each time step) or later.

In particular, the model M is trained in the training environment E on the basis of the experience data so as to maximize a reward function $R_t$. When each turbine 11 is associated with its own reward, the reward function is for example a combination of the rewards of each turbine 11. The training environment E is a multi-agent reinforcement learning environment and each agent corresponds to a different turbine 11 of the wind farm 10. Hence, the training enables to take into account the interactions between each turbine 11 of the wind farm 10.

Preferably, the environment E comprises a simulator enabling to calculate, for each time step $\Delta t$, the wake effect for each turbine 11 and the energy produced by each turbine 11 as a function of the configuration data, of the experience data and of the actions $A_t$ determined for the turbines 11. The simulator is, for example, the simulator FLORIS (FLOw Redirection and Induction in Steady state) produced by NREL. The principle of this simulator is described in the article J. Annoni, P. Fleming, A. Scholbrock, J. Roadman, S. Dana, C. Adcock, F. Porte-Agel, S. Raach, F. Haizmann, and D. Schlipf. Analysis of control-oriented wake modeling tools using lidar field results. Wind Energy Science, 3(2):819-831, 2018.

The reward function $R_t$ is relative to the energy produced by the wind farm 10. In an example, there is only one reward $R_t$ for each time step $\Delta t$. Such reward $R_t$ takes into account data obtained for each turbine 11 of the wind farm 10. In another example, each turbine 11 is associated with its own reward $R_t$, which can be the same reward $R_t$.

Preferably, the reward function $R_t$ depends on the power produced by each turbine 11 and the maximum theoretical power produced by each turbine 11. In an example, the reward function $R_t$ is given by the following formula:

$$R_t = \frac{1}{N} \sum_{k \in turbines} \frac{P_t^k}{P_{theoretical}^k}$$

Where:

- $R_t$ is the reward function for time step $\Delta t$,
- $N$ is the number of turbines 11,
- $P_t^k$ is the power produced by the turbine k for time step $\Delta t$ (determined by the environment E), and
- $P_{theoretical}^k$ is the maximum theoretical power produced by the turbine k.

Preferably, during the training step, the model M is trained so as to respect some constraints while maximizing the reward function $R_t$. Optionally, the constraints are directly integrated in the reward function formula.

For example, the constraints comprise at least one of the following constraints:

- a constraint relative to a possible range of values for at least one angle of rotation of the turbine 11 as compared to a nominal value. This constraint avoids positions which are not physically possible or would entail the break of the turbine 11.
- a constraint relative to the rotation angle of each turbine 11 for each time step in order to limit the fatigue of each turbine 11 and/or the maintenance costs for each turbine 11.

Hence, in the above examples, the training step 120 implies obtaining at least one set of data for each time step $\Delta t$ of each experience. Each set of data comprises:

- the state $S_t$ of each turbine 11 at the considered time step $\Delta t$,
- the wind parameter(s) $P_{wt}$ at the considered time step $\Delta t$,
- the action $A_t$ determined by the model M for each turbine 11,
- the future state $S_{t+1}$ of each turbine 11 when applying the corresponding action $A_t$ on said turbine 11, and
- the reward $R_t$ obtained for the considered time step $\Delta t$,

The state $S_t$ of a turbine 11 for a given time step

$\Delta t$ is either an initial state $S_{t0}$ (for example when the experience is stopped because the end of the experience is reached or the constraints are not met or the obtained reward $R_t$ is inferior to a predetermined threshold), or a future state $S_{t+1}$ obtained from the set of data of the previous time step $\Delta t$.

It will be understand that the training step 120 comprises the training, the test and the validation of the control model M. Hence, the control model M obtained at the end of the training step 120 is suitable to be used in real conditions to control the wind farm 10.

The control method comprises a step 130 of operating the control model M. The operating step 130 comprises the determination of actions $A_t$ for controlling the turbines 11 of the wind farm 10, following the reception by the control model M, of the current state $S_t$ of the turbines 11 of the wind farm 10 and of current wind parameter(s) $P_{wt}$ of the wind flowing on the wind farm 10. The wind parameters are for example measured by sensors (for example in real time). The operating step 130 is, for example, implemented by the calculator 20 interacting with the computer program product 22, that is to say is computer-implemented.

The control method comprises a step 140 of carrying out the determined actions $A_t$ by sending commands to the turbines 11 of the wind farm 10. Advantageously, the step 140 is also computer-implemented.

The commands are, for example, commands to modify the orientation (the yaw) of the turbines 11 of the wind farm 10. Depending on the case, an action $A_t$ may also be the absence of commands (corresponding to the action of doing nothing).

In the example illustrated on figure 4, the steps 130 and 140 are dynamic and are repeated over time.

Preferably, the model M is updated (trained again) with the data obtained during steps 130 and 140. When this is the case, the reward is obtained following the real implementation of the actions on the turbines 11.

Hence, the control method enables controlling the turbines 11 of the wind farm 10 in order to maximize the power produced by the wind farm 10, notably the annual energy production (AEP). The control method works for very large wind farms (more than 20 turbines) with time varying wind direction and speed.

As compared to the state of the art, the control method enables taking into account the interactions between the turbines 11, which impacts the wake effect. This enables to make each turbine 11 aware of the others so that they take non-selfish and more optimal decisions.

Depending on the possible constraints taken into account, the control method also enables to minimize the operational expenditures (OPEX) and the maintenance costs.

In addition, the control method enables to optimize the design of a wind farm 10. Indeed, the possibilities bring by the control model M enable to increase the density of turbines 11 in a same space or to use shorter cables to minimize the installation costs.

The person skilled in the art will understand that the embodiments and variants described above can be combined to form new embodiments provided that they are technically compatible.

**Claims**

1. A method for controlling a wind farm (10), the wind farm (10) comprising several wind turbines (11), each turbine (11) being suitable for taking a plurality of states $(S_t)$, each state $(S_t)$ being at least relative to an orientation of the turbine (11), each turbine (11) being suitable for changing from one state $(S_t)$ to another by implementing an action $(A_t)$ on the turbine (11), the method comprising the following steps which are computer-implemented:

   - obtaining configuration data which are data relative to the turbines (11) of the wind farm (10),
   - obtaining experience data which are data forming experiences used to train a control model (M), each experience extending over a given time period divided into time steps $(\Delta t_0, ..., \Delta t_n)$, the experience data comprising, for each experience, an initial state $(S_{t0})$ for each turbine (11) of the wind farm (10) and, for each time step $(\Delta_t)$ of said experience, a value of at least one wind parameter $(P_{wt})$ relative to the wind flowing on the wind farm (10), and
   - training a model (M) for determining actions $(A_t)$ enabling to control each turbine (11) of the wind farm (10) depending on the state $(S_t)$ of each turbine (11), the model (M) being trained in a training environment (E) on the basis of the experience data so as to maximize a reward function $(R_t)$, the training environment (E) being a multi-agent reinforcement learning environment, each agent corresponding to a different turbine (11) of the wind farm (10), the reward function $(R_t)$ being relative to the energy produced by the wind farm (10), the obtained trained model (M) being a control model (M) suitable to be used to control the wind farm (10).

2. A method according to claim 1, wherein the state $(S_t)$ of each turbine (11) is relative to at least one angle of rotation of the turbine (11) among the yaw, the pitch and the tilt, the angle of rotation being preferably the yaw.

3. A method according to claim 2, wherein, for each turbine (11), the actions $(A_t)$ are chosen among the following actions $(A_t)$: stand still, clockwise rotation of a certain angle relative to the current position and anticlockwise rotation of a certain angle relative to the current position..

4. A method according to any one of claims 1 to 3, wherein the training environment (E) comprises a simulator enabling to calculate, for each time step $(\Delta t)$, the wake effect for each turbine (11) and the energy produced by each turbine (11) as a function of the configuration data, of the experience data and of the actions $(A_t)$ determined for the turbines (11).

5. A method according to any one of claims 1 to 4, wherein the reward function $(R_t)$ depends on the power produced by each turbine (11) and the maximum theoretical power produced by each turbine (11).

6. A method according to any one of claims 1 to 5, wherein during the training step, the model (M) is trained so as to respect some constraints while maximizing the reward function $(R_t)$.

7. A method according to claim 6, wherein the constraints comprise at least one of the following constraints:

   - a constraint relative to a possible range of values for at least one angle of rotation of the turbines (11) as compared to a nominal value, and
   - a constraint relative to the rotation angle of each turbine 11 for each time step in order to limit the fatigue of each turbine (11) and/or the maintenance costs for each turbine (11).

8. A method according to any one of claims 1 to 7, wherein the method comprises :

   - a step of operating the control model (M) comprising the determination of actions $(A_t)$ for controlling the turbines (11) of the wind farm (10), following the reception by the control model (M), of the current state $(S_t)$ of the turbines (11) of the wind farm (10) and of current wind parameter(s) $(P_{wt})$, and
   - a step of carrying out the determined actions $(A_t)$ by sending commands to the turbines (11) of the wind farm (10).

9. A method according to any one of claims 1 to 8, wherein the training step comprises obtaining at least one set of data for each time step $(\Delta_t)$ of each experience, each set of data comprising:

   - the state $(S_t)$ of each turbine (11) at the considered time step $(\Delta t)$,
   - the wind parameter(s) $(P_{wt})$ at the considered time step $(\Delta t)$,
   - the action $(A_t)$ determined by the model (M) for each turbine (11),
   - the future state $(S_{t+1})$ of each turbine (11) when applying the corresponding $(A_t)$ on said turbine

(11), and
- the reward ($R_t$) obtained for the considered time step ($\Delta t$),

the state ($S_t$) of a turbine (11) for a given time step ($\Delta_t$) being either an initial state ($S_{t0}$) or a future state ($S_{t+1}$) obtained from the set of data of the previous time step ($\Delta t$).

10. A method according to any one of claims 1 to 9, wherein the configuration data comprise at least one of the following data: the position of each turbine (11), the type or model of each turbine (11), the maximum theoretical power produced by each turbine (11) and a power curve for each turbine 11.

11. A method according to any one of claims 1 to 10, wherein the at least one wind parameter ($P_{wt}$) is chosen among the direction of the wind and the speed of the wind.

12. A method according to any one of claims 1 to 11, wherein at least two turbines (11) of the wind farm (10) are different.

13. A computer program product comprising a readable information carrier having stored thereon a computer program comprising program instructions, the computer program being loadable onto a data processing unit and causing at least the steps of obtaining configuration data, of obtaining experience data and of training of a method according to any one of claims 1 to 12 to be carried out when the computer program is carried out on the data processing unit.

14. A readable information carrier on which a computer program product according to claim 13 is stored.

FIG.1

tilt

pitch

yaw

Z

X

Y

FIG.2

FIG.3

EP 4 187 083 A1

FIG.4

FIG.5

Europäisches
Patentamt

European
Patent Office

Office européen
des brevets

## EUROPEAN SEARCH REPORT

Application Number

EP 21 30 6667

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PADULLAPARTHI VENKATA RAMAKRISHNA ET AL: "FALCON- FArm Level CONtrol for wind turbines using multi-agent deep reinforcement learning", RENEWABLE ENERGY, PERGAMON PRESS, OXFORD, GB, vol. 181, 10 September 2021 (2021-09-10), pages 445-456, XP086848004, ISSN: 0960-1481, DOI: 10.1016/J.RENENE.2021.09.023 [retrieved on 2021-09-10] * the whole document * | 1-14 | INV. F03D7/04 F03D7/02 G05B13/02 |
| X | BUI VAN-HAI ET AL: "Distributed Operation of Wind Farm for Maximizing Output Power: A Multi-Agent Deep Reinforcement Learning Approach", IEEE ACCESS, IEEE, USA, vol. 8, 8 September 2020 (2020-09-08), pages 173136-173146, XP011811645, DOI: 10.1109/ACCESS.2020.3022890 [retrieved on 2020-09-28] * the whole document * | 1-14 | |
| | | | TECHNICAL FIELDS SEARCHED (IPC) |
| X | STANFEL PAUL ET AL: "A Distributed Reinforcement Learning Yaw Control Approach for Wind Farm Energy Capture Maximization*", 2020 AMERICAN CONTROL CONFERENCE (ACC), AACC, 1 July 2020 (2020-07-01), pages 4065-4070, XP033797520, DOI: 10.23919/ACC45564.2020.9147946 [retrieved on 2020-07-24] * the whole document * | 1-14 | F03D G05B |
| A | EP 3 792 484 A1 (SIEMENS GAMESA RENEWABLE ENERGY AS [DK]) 17 March 2021 (2021-03-17) * the whole document * | 1-14 | |

The present search report has been drawn up for all claims

| Place of search | Date of completion of the search | Examiner |
|---|---|---|
| The Hague | 16 May 2022 | Libeaut, Laurent |

EPO FORM 1503 03.82 (P04C01)

## ANNEX TO THE EUROPEAN SEARCH REPORT
## ON EUROPEAN PATENT APPLICATION NO.

EP 21 30 6667

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2022

| Patent document cited in search report | | Publication date | Patent family member(s) | | Publication date |
|---|---|---|---|---|---|
| EP 3792484 | A1 | 17-03-2021 | CN | 114341488 A | 12-04-2022 |
| | | | EP | 3792484 A1 | 17-03-2021 |
| | | | EP | 3997335 A1 | 18-05-2022 |
| | | | WO | 2021052669 A1 | 25-03-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **W. TONG.** Fundamentals Of Wind Energy. *WIT Transactions on State-of-the-art in Science and Engineering,* 2010, vol. 44

- **J. ANNONI ; P. FLEMING ; A. SCHOLBROCK ; J. ROADMAN ; S. DANA ; C. ADCOCK ; F. PORTE-AGEL ; S. RAACH ; F. HAIZMANN ; D. SCHLIPF.** Analysis of control-oriented wake modeling tools using lidar field results. *Wind Energy Science,* 2018, vol. 3 (2), 819-831